# EUROPEAN PATENT SPECIFICATION

(11) **EP 2 078 419 B1**
(45) Date of publication and mention of the grant of the patent: **30.10.2019**
(21) Application number: 07844821.4
(22) Date of filing: 01.11.2007
(51) Int. Cl.: G06T 7/246

(54) **SEGMENT TRACKING IN MOTION PICTURE**
SEGMENTVERFOLGUNG IN EINEM FILM
POURSUITE DE SEGMENTS DANS DES IMAGES ANIMÉES

(30) Priority: 01.11.2006 US 856201 P; 04.09.2007 US 849916
(43) Date of publication of application: 15.07.2009
(73) Proprietor: Sony Corporation, Tokyo 108-0075 (JP); Sony Pictures Entertainment Inc., Culver City, CA 90232-3195 (US)
(72) Inventor: GORDON, Demian, San Diego CA 92127-1898 (US)
(74) Representative: D Young & Co LLP
(86) International application number: PCT/US2007/083365
(87) International publication number: WO 2008/057957

(56) References cited:
- WO-A1-01/63320
- US-A- 5 622 187
- US-A1- 2002 097 245
- US-A1- 2003 095 186
- US-A1- 2003 095 186
- US-A1- 2004 155 962
- US-A1- 2004 179 013
- US-A1- 2004 258 306
- US-A1- 2005 083 333
- US-A1- 2005 201 963
- US-A1- 2006 055 706
- US-A1- 2006 203 096

## Description

### BACKGROUND

The present invention relates generally to motion capture, and more particularly to segment tracking using motion marker data.

Motion capture systems are used to capture the movement of an actor or object and map it onto a computer-generated actor/object as a way of animating it. These systems are often used in the production of motion pictures and video games for creating a digital representation of an actor or object for use as source data to create a computer graphics ("CG") animation. In a typical system, an actor wears a suit having markers attached at various locations (e.g., small reflective markers are attached to the body and limbs). Appropriately placed digital cameras then record the actor's body movements in a capture volume from different angles while the markers are illuminated. The system later analyzes the images to determine the locations (e.g., spatial coordinates) of the markers on the actor's suit in each frame. By tracking the locations of the markers, the system creates a spatial representation of the markers over time and builds a digital representation of the actor in motion. The motion is then applied to a digital model in virtual space, which may be textured and rendered to produce a complete CG representation of the actor and/or the performance. This technique has been used by special effects companies to produce realistic animations in many popular movies.

Prior art includes WO 01/63320 A1 and US 2004/258306 A1.

### SUMMARY

Certain implementations as disclosed herein provide for methods, systems, and computer programs for providing segment tracking in motion capture.

In one aspect, a method as disclosed herein provides for segment tracking. The method is defined in claim 1.

In another aspect, a system for segment tracking is disclosed. The system is defined in claim 16.

Other features and advantages of the present invention will become more readily apparent to those of ordinary skill in the art after reviewing the following detailed description and accompanying drawings.

### BRIEF DESCRIPTION OF THE DRAWINGS

The details of the present invention, both as to its structure and operation, may be gleaned in part by study of the accompanying drawings, in which:
Figure 1 is a block diagram of a motion capture system in accordance with one implementation;
Figure 2 shows a sample collection of markers according to an implementation of the present invention;
Figure 3 is an illustration of a human figure with marker placement positions according to one implementation;
Figure 4 presents a frontal view of a human body model equipped with markers;
Figure 5 depicts a quartering back view of a human body model configured with markers;
Figure 6 is a flowchart describing a method of segment tracking;
Figure 7A illustrates a marker labeled or patterned to represent a capital letter A;
Figure 7B illustrates a known pattern comprising a plurality of markers forming the letter A as a pattern;
Figure 7C illustrates a marker comprising a literal expression of the letter A;
Figure 8 is a flowchart depicting an example method of utilizing strips of marking material;
Figure 9 is a functional block diagram of an implementation of a segment tracking system;
Figure 10A illustrates a representation of a computer system and a user;
Figure 10B is a functional block diagram illustrating the computer system hosting the segment tracking system; and
Figure 11 is a functional block diagram illustrating an implementation of a segment tracking module.

### DETAILED DESCRIPTION

Certain implementations as disclosed herein provide segment tracking in motion capture. Implementations include using one or more known patterns of markers applied on actors and/or objects. The marker(s) comprising a pattern are tracked as a group rather than individually. Thus, the pattern can provide information, such as identification, position/translation, and orientation/rotation, which significantly aids marker tracking.

After reading this description it will become apparent to one skilled in the art how to practice the invention in various alternative implementations and alternative applications. However, although various implementations of the present invention will be described herein, it is understood that these embodiments are presented by way of example only, and not limitation. As such, this detailed description of various alternative implementations should not be construed to limit the scope or breadth of the present invention as set forth in the appended claims.

According to implementations of the present invention, markers encoded with known patterns are applied to actors and/or objects, normally covering various surfaces of the actor and/or object. Identification, position/translation, and orientation/rotation of the actor and/or object are obtained by recording and digitizing images of the patterns. The patterns of markers can be selected to mitigate "missing-marker" effects in motion capture during marker occlusions. In another implementation, identifiable random patterns are used as "known patterns."

The known (and random) patterns may be generated, for example, using materials including quantum nanodots, glow-in-the dark (i.e., fluorescent) material, tattoos, and virtually any visible, infra-red, or ultra-violet ink, paint, or material which can be applied in a sufficiently identifiable pattern. The patterns may also include patterns of inherent features (e.g., moles or wrinkles) of the actor and/or objects.

In one implementation, a pattern comprises a plurality of markers or features coupled to the actor's body. In another implementation, a pattern comprises a single marker (e.g., a marker strip) or feature. The pattern can be applied or affixed on or around the surfaces of an actor's limbs, hands, and feet. In one example, centroid information relating to the pattern can be derived from the circular disposition of a pattern strip wrapped around a limb (i.e., appendage). By applying known patterns to the actors and/or objects and then recording their movements with cameras, it is possible to obtain not only position but also marker identity and spatial orientation.

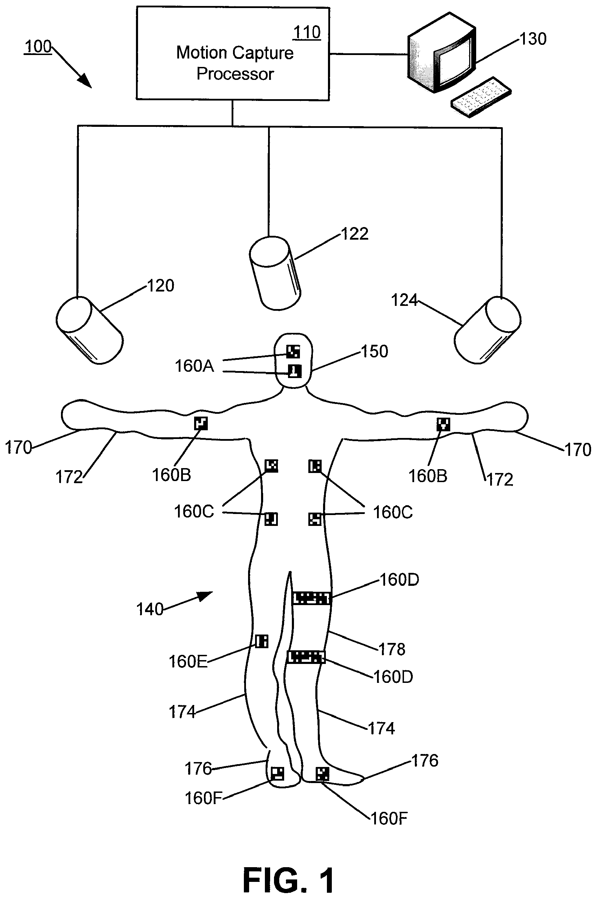

Figure 1 is a functional block diagram of a motion capture system 100 in accordance with one implementation. The motion capture system 100 includes a motion capture processor 110, motion capture cameras 120, 122, 124, a user workstation 130, and an actor's body 140 and face 150 appropriately equipped with marker material 160 in a predetermined pattern. Although Figure 1 shows only thirteen markers 160A-160F, substantially more markers can be used on the body 140 and face 150. The motion capture processor 110 is connected to the workstation 130 by wire or wirelessly. The motion capture processor 110 is typically configured to receive control data packets from the workstation 130.

As shown, three motion capture cameras 120, 122, 124, are connected to the motion capture processor 110. Generally more than three motion capture cameras are required according to a variety of user- and animation-related needs and requirements. The motion capture cameras 120, 122, 124 are focused on the actor's body 140 and face 150, on which markers 160A-160F have been applied.

The placement of the markers 160A-160F is configured to capture motions of interest including, for example, the body 140, face 150, hands 170, arms 172, legs 174, 178, and feet 176 of the actor. In the implementation illustrated in Figure 1, markers 160A capture motions of the face 150; markers 160B capture motions of the arms 172; markers 160C capture motions of the body 140; markers 160D, 160E capture motions of the legs 174; and markers 160F capture motions of the feet 176. Further, uniqueness of the patterns on the markers 160A-160F provide information that can be used to obtain identification and orientation of the markers. The marker 160D is configured as a strip of pattern wrapped around a leg of the actor.

The motion capture cameras 120, 122, 124 are controlled by the motion capture processor 110 to capture synchronous sequences of two-dimensional ("2-D") images of the markers. The synchronous images are integrated into image frames, each image frame representing one frame of a temporal sequence of image frames. That is, each individual image frame comprises an integrated plurality of simultaneously acquired 2-D images, each 2-D image generated by an individual motion capture camera 120, 122, or 124. The 2-D images thus captured may typically be stored, or viewed in real-time at the user workstation 130, or both.

The motion capture processor 110 performs the integration (i.e., performs a "reconstruction") of the 2-D images to generate the frame sequence of three-dimensional ("3-D," or "volumetric") marker data. This sequence of volumetric frames is often referred to as a "beat," which can also be thought of as a "take" in cinematography. Conventionally, the markers are discrete objects or visual points, and the reconstructed marker data comprise a plurality of discrete marker data points, where each marker data point represents a spatial (*i*.*e*., 3-D) position of a marker coupled to a target, such as an actor 140. Thus, each volumetric frame includes a plurality of marker data points representing a spatial model of the target. The motion capture processor 110 retrieves the volumetric frame sequence and performs a tracking function to accurately associate (or, "map") the marker data points of each frame with the marker data points of preceding and subsequent frames in the sequence.

For example, each individual marker data point in a first volumetric frame corresponds to a single marker placed on an actor's body 140. A unique label is assigned to each such marker data point of the first volumetric frame. The marker data points are then associated with corresponding marker data points in a second volumetric frame, and the unique labels for the marker data points of the first volumetric frame are assigned to the corresponding marker data points of the second volumetric frame. When the labeling (*i*.*e*., tracking) process is completed for the entire volumetric frame sequence, the marker data points of the first volumetric frame are thus traceable through the sequence, resulting in an individual trajectory for each marker data point.

Discrete markers are conventionally used to capture the motion of rigid objects or segments of an object or body. For example, rigid markers attached at an elbow and a wrist define the positions of each end of a forearm. When the forearm is moved, the motions of the elbow and wrist markers are tracked and resolved as described above in a sequence of volumetric frames. The motion of the forearm is thus modeled as a rigid body (*e*.*g*., a rod) with only the ends defined by the elbow and wrist markers. However, while translational movements of the forearm are easily resolved by analyzing the changes in spatial positions of the elbow and wrist markers, a common twisting motion of the forearm is difficult to detect because a twist can be performed without substantially moving the wrist or elbow.

In one implementation, contrasting with the use of conventional discrete markers, markers disposed in a pattern are used, allowing the motion capture processor 110 to track the pattern as a group rather than individually tracking markers. Because the pattern provides identification information, movement of the markers of one pattern with respect to another pattern can be computed. In one implementation, a pattern tracked in this way is reconstructed in each volumetric frame as an individual object having spatial position information. The object is tracked through the sequence of volumetric frames, yielding a virtual animation representing the various spatial translations, rotations, and twists, for example, of the part of the actor to which the pattern is applied.

In one implementation, one or more known patterns are printed onto strips 160D. The strips 160D are then wrapped around each limb (*i*.*e*., appendage) of an actor such that each limb has at least two strips. For example, two strips 160D are depicted in Figure 1, wrapped around the actor's left thigh 178. End effectors (*e*.*g*., hands, feet, head), however, may be sufficiently marked with only one strip. Once captured, as discussed above, the printed patterns of the wrapped strips 160D enable the motion capture processor 110 to track the position and orientation of each "segment" representing an actor's limb from any angle, with as few as only one marker on a segment being visible. Illustrated in Figure 1, the actor's thigh 178 is treated as a segment at the motion capture processor 110. By wrapping a patterned strip 160D with multiple markers around a limb in substantially a circle, the "centroid" of the limb (*i*.*e*., segment) can be determined. Using multiple patterned strips 160D of markers, a centroid may be determined to provide an estimate or model of the bone within the limb. Further, it is possible to determine orientation, translation and rotation information regarding the entire segment from one (or more if visible) markers and/or strips applied on the segment.

In one implementation, the motion capture processor 110 performs segment tracking according to techniques disclosed herein from which identification, positioning/translation, and orientation/rotation information is generated for a group of markers (or marked areas). While a conventional optical motion capture system typically records only position for a marker, segment tracking enables the motion capture processor 110 to identify which marker(s) are being captured and to locate the position and orientation of the captured markers of the segment. Once the markers are detected and identified, position and orientation/rotation information regarding the segment can be derived from the identified markers. Confidence in the determinations of position and orientation information for the segment increases as more markers are detected and identified.

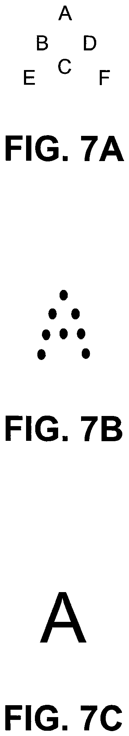

Markers or marking material applied in known patterns (and identifiable random patterns) essentially encode identification and orientation information facilitating efficient segment tracking. In one implementation, a known pattern of smaller markers constitutes a single marker or marking area. For example, a marker labeled or patterned as representing a capital letter A, as shown in Figure 7A, actually comprises six smaller markers A, B, C, D, E and F. In another implementation, a known pattern comprises a plurality of markers or marking areas forming the letter A as a pattern, as shown in Figure 7B. The eight dots forming the letter A function as a single, larger marker. Alternatively, a marker can comprise a literal expression of the letter A, as shown in Figure 7C. A common characteristic to the markers illustrated in Figures 7A-C is that they all have an identifiable orientation. In each case, the marker can be rotated, but will remain identifiable as a letter A, which significantly enhances marker tracking efficiency because it will be readily trackable from frame to frame of captured image data. In addition to identification, an orientation may also be determined for each of the marker examples from frame to frame. If a marker 160B (see Figure 1) is coupled to an actor's forearm, for example, it will therefore rotate substantially 180 degrees when the actor moves the forearm from a hanging position to a straight-up, overhead reaching position. Tracking the marker will reveal not only the spatial translation to the overhead position, but that the forearm segment is oriented 180 degrees differently from before. Thus, marker tracking is enhanced and improved using markers or groups of markers encoding identification and orientation information.

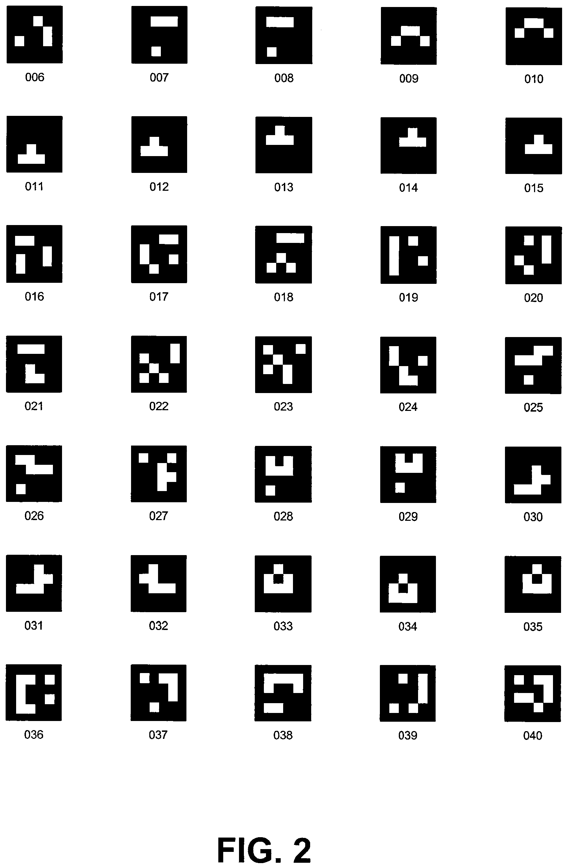

Figure 2 shows a sample collection of markers according to an implementation of the present invention. Each marker comprises a 6x6 matrix of small white and black squares. Identification and orientation information is encoded in each marker by a unique placement of white squares within the 6x6 matrix. In each case, rotating the marker causes no ambiguity in terms of determining the identity and orientation of the marker, thus demonstrating the effectiveness of this scheme for encoding information. It will be appreciated that encoding schemes using arrangements other than the 6x6 matrix of black and white elements disclosed herein by example may also be implemented.

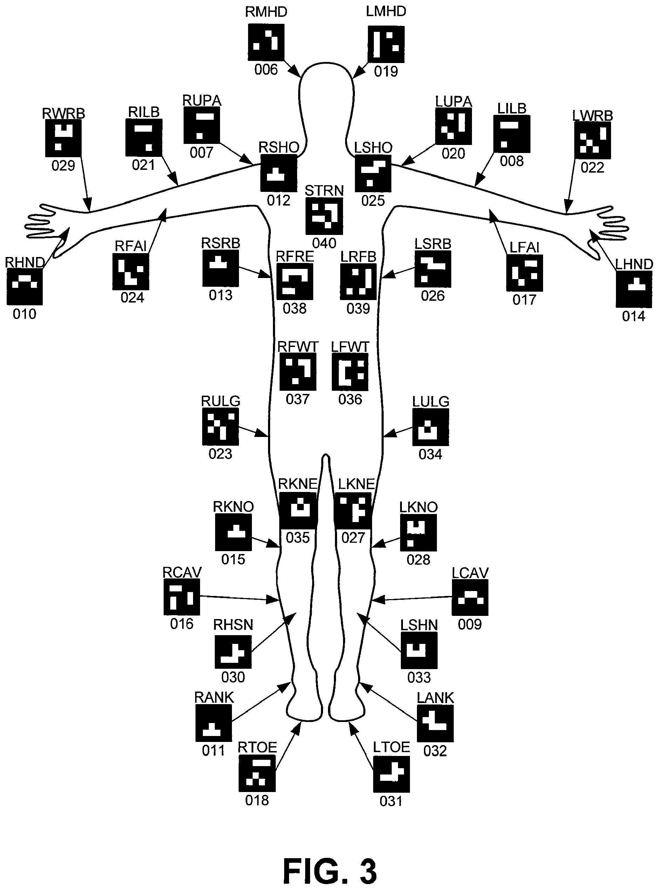

Figure 3 is an illustration of a human figure with marker placement positions according to one implementation. The markers shown encode identification and orientation information using a scheme similar to that depicted in Figure 2. They are positioned substantially symmetrically, and such that each major extremity (i.e., segment) of the body is defined by at least one marker. Approximately half of the markers depicted are positioned on a surface of the body not visible in the frontal view shown, and instead include arrows pointing to their approximate occluded positions. Referring to Figure 1, motion capture cameras 120, 122, 124 (representing typically a much larger plurality of cameras) encompass a capture space in which the actor's body 140 and face 150 are in motion. Even when the view of any of the markers is occluded to some subset of motion capture cameras 120, 122, 124, another subset will retain a view and capture the motions of the occluded markers. Thus, virtually all movements by an actor so equipped with markers can be captured using the systems described in relation to Figure 1, and tracked using segment tracking methods.

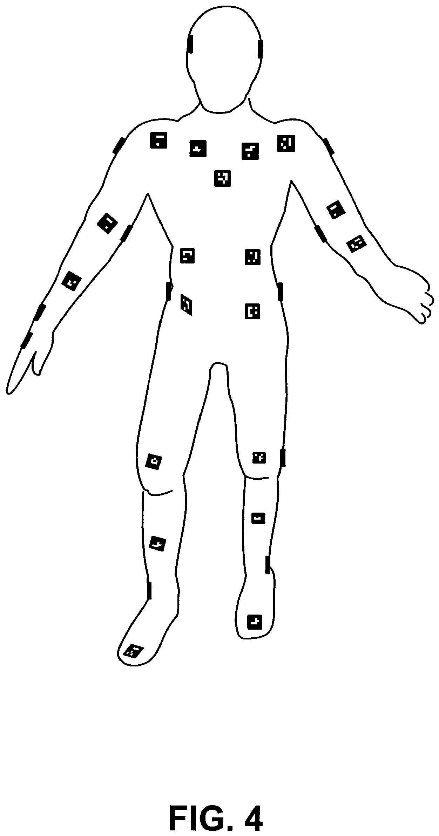

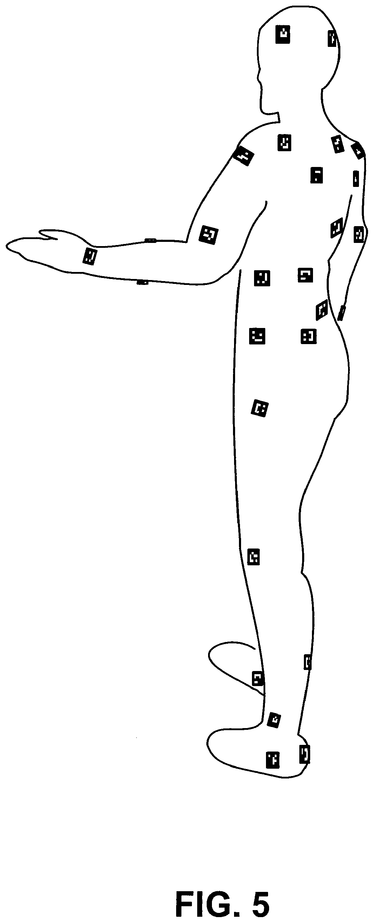

Figure 4 presents a frontal view of a human body model equipped with markers as described in Figure 3. As shown, only the markers on the forward-facing surfaces of the model are visible. The rest of the markers are partially or fully occluded. Figure 5 depicts a quartering back view of the same human body model in substantially the same pose as shown in Figure 4. From this view, the frontally-placed markers are occluded, but many of the markers occluded in Figure 4 are now visible. Thus, at any given time, substantially all of the markers are visible to some subset of the plurality of motion capture cameras 120, 122, 124 placed about the capture space.

Also, the marker placements on the 3-D model depicted in Figures 4 and 5 substantially define the major extremities (segments) and areas on the body that articulate motions (e.g., the head, shoulders, hips, ankles, etc.). When segment tracking is performed on the captured data, the positions of the body on which the markers are placed will be locatable and their orientations determinable. Further, the segments of the body defined by the marker placements, e.g., an upper arm segment between an elbow and a shoulder, will also be locatable because of the markers placed substantially at each end of that segment. The position and orientation of the upper arm segment will also be determinable from the orientations derived from the individual markers defining the upper arm.

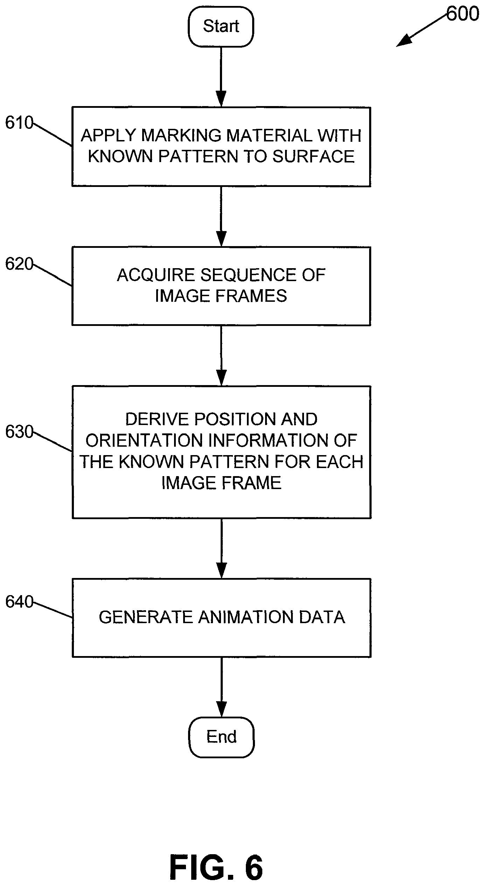

Figure 6 is a flowchart describing a method of segment tracking 600 according to an implementation. A marking material with a known pattern, or an identifiable random pattern, is applied to a surface, at 610. In one implementation, the surface is that of an actor's body, and a pattern comprises a plurality of markers that is coupled to the actor's body. In another implementation, a pattern comprises a single marker (e.g., a marker strip) that is coupled to the actor's body. The pattern may also be formed as a strip 160D and affixed around the actor's limbs, hands, and feet, as discussed in relation to Figure 1. Markers also include reflective spheres, tattoos glued on an actor's body, material painted on an actor's body, or inherent features (e.g., moles or wrinkles) of an actor. In one implementation, patterns of markers can be applied to the actor using temporary tattoos.

A sequence of image frames is acquired next, at 620, according to methods and systems for motion capture described herein, and above in relation to Figure 1. Once captured, the image data are used to reconstruct a 3-D model of an actor or object equipped with the markers, for example. In one implementation, this includes deriving position and orientation information of the marker pattern for each image frame, at 630. Position information is facilitated by the unique identification information encoded in the markers provided by the pattern using characteristic rotational invariance, as discussed with respect to Figures 4 and 5. Orientation information may be derived by determining the amount of rotation of the markers comprising the pattern. Marker rotations, and orientation in general, may be defined by affine representations in the 3-D space facilitating marker tracking. For example, an orientation can be represented by values representing the six degrees of freedom ("6DOF") of an object in 3-D space. Thus, the orientation can have three values representing any displacement in position (translation) from the origin of the coordinate system (e.g., a Euclidean space), and three values representing angular displacements (rotations) relative to the primary axes of the coordinate system.

Animation data based on the movements of the markers are generated, at 640. For example, a virtual digital model is to be activated by the data derived from the movements of an actor captured in the image data. During the performance, the actor swings the leg according to a script. The actor's legs are equipped with markers at each major joint, i.e., the hip, knee, and ankle, for instance. The movements of the markers are determined and used to define the movements of the segments of the actor's leg. The segments of the actor's leg correspond to the segments of the leg of the digital model, and the movements of the segments of the actor's leg are therefore mapped to the leg of the virtual digital model to animate it.

As discussed in relation to Figure 6, at 610, a pattern may be formed as a strip 160D (see Figure 1) and affixed around an actor's limbs, hands, and feet. A centroid may then be determined from the circular disposition of the strip wrapped around the limb. Two such strips positioned at each end of the limb may then be used to determine a longitudinal centroid relative to the limb (segment), approximating an underlying skeletal element, for example.

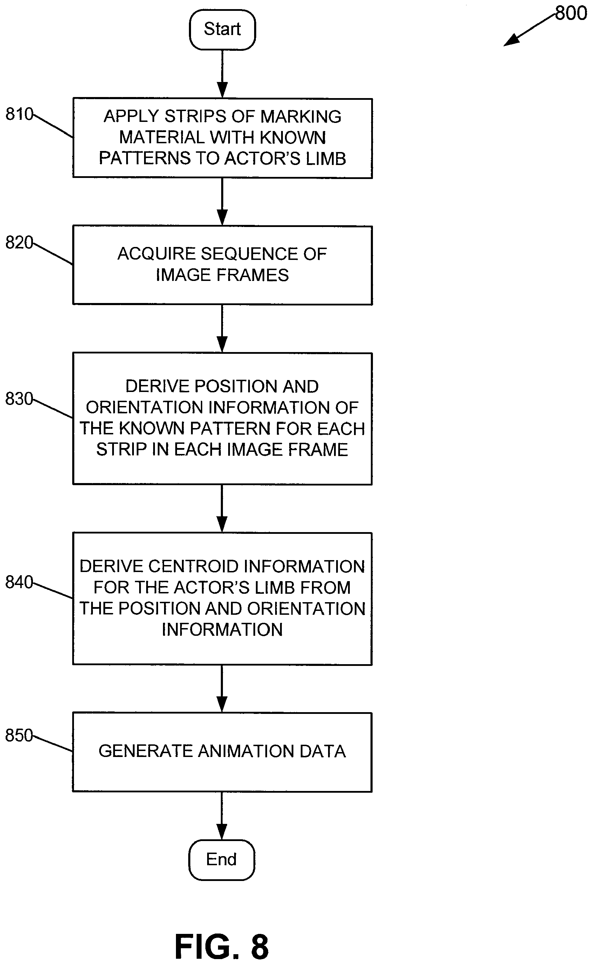

A flowchart depicting a method of utilizing strips of marking material 800 is provided in Figure 8. Strips of marking material with known patterns are applied to one of an actor's limbs, at 810, typically by wrapping it around the limb. Because the wrapped strip of marking material is disposed in a substantially circular shape, centroids of the strips may be determined and used to express the movements of the body area wrapped with the strip. Further, the motion of a skeletal element of the limb can thus be approximated and used for skeleton modeling.

A sequence of image frames is acquired next, at 820, according to methods and systems for motion capture described above in relation to Figure 1. Once captured, the image data are used to reconstruct a 3-D model of an actor equipped with the markers, for example, in essentially the same manner as described in Figure 6, with respect to 620. In one implementation, this includes deriving position and orientation information of the known pattern for each strip in each image frame, at 830, in essentially the same manner as described in Figure 6, with respect to 630.

Centroid information is derived for the actor's limb equipped with one or more strips from the position and orientation information, at 840. As discussed above, the centroids of two or more strips can be used to approximate the skeletal structure (i.e., a bone) within the actor's limb. The movements of the centroids of the marker strips are then used to express the movements of the skeletal structure, and thus the movement of the limb.

Animation data based on the movements of the marker strips is generated, at 850. For example, during the performance, the actor swings his leg according to a script. The actor's legs are equipped with strips of marker material wrapped around as described above. That is, for instance, a strip may be wrapped around the upper thigh and another wrapped around near the knee. The movements of the centroids of the marker strips are determined and used to define the skeletal structure of the upper leg, and consequently a skeletal element within the upper leg of a virtual digital model corresponding to the actor. The movements of the centroids can therefore used to animate the leg of the virtual digital model.

In one implementation, the markers are printed or formed using quantum nanodots (also known as "Quantum Dots," or "QDs"). The system would be similar in configuration to the traditional retro-reflective system, but with the addition of an exciter light source of a specific frequency (e.g., from existing filtered ring lights or from another source) and narrow band gap filters placed behind the lenses of the existing cameras, thus tuning the cameras to the wavelength of light emitted by the QDs.

QDs are configured to be excited by light of a particular wavelength, causing them to emit light (i.e., fluoresce) at a different wavelength. Because they can emit light that has been quantum shifted up the spectrum from the excitation wavelength, the excitation light can be filtered from the cameras. This causes any light that falls outside of the particular emission spectrum for the QDs to be substantially blocked at the camera.

QDs can be tuned to virtually any wavelength in the visible or invisible spectrum. This means that a group of cameras can be filtered to only see a specific group of markers and nothing else, significantly cutting down the workload required of a given camera, and allow the camera to work "wide open" in the narrow response range of the QDs.

In one implementation, the quantum nanodots are added to a medium such as ink, paint, plastic, temporary tattoo blanks, etc.

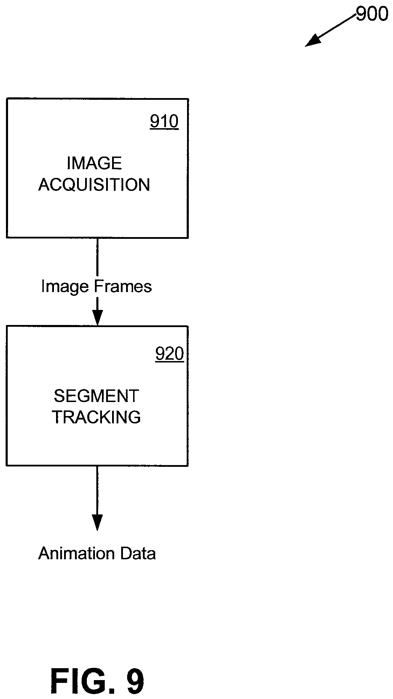

Figure 9 is a functional block diagram of an implementation of a segment tracking system 900. An image acquisition module 910 generates image frames of motion capture image data, and a segment tracking module 920 receives image frames and generates animation data.

The image acquisition module 910 operates according to methods discussed above relating to the motion capture system 100 described in Figure 1. In one implementation, the image frames comprise volumetric data including untracked marker data. That is, marker data exist in each frame as unlabeled spatial data, unintegrated with the marker data of the other frames.

The segment tracking module 920 operates according to methods and schemes described in relation to Figure 2 through Figure 9 above.

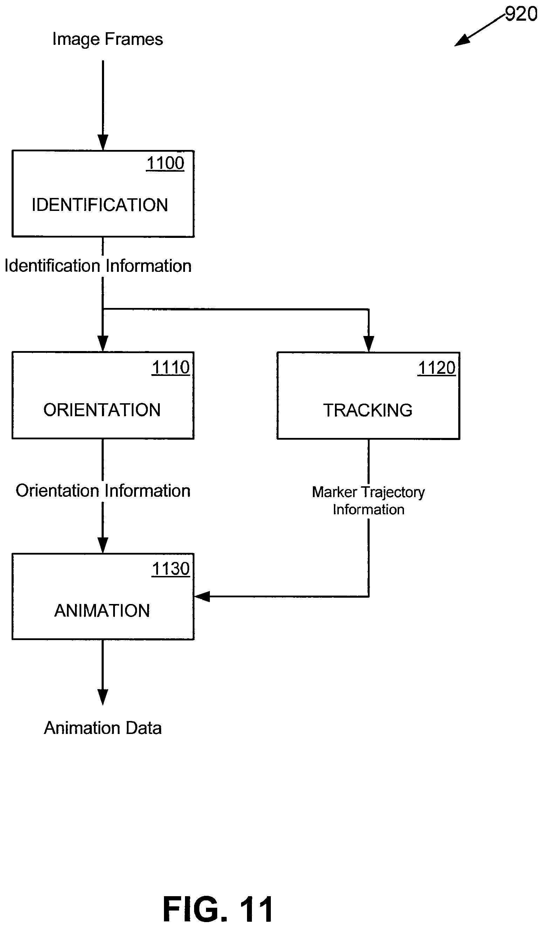

Figure 11 is a functional block diagram depicting an example configuration of a segment tracking module 920. As shown, the segment tracking module 920 includes an identification module 1100, an orientation module 1110, a tracking module 1120, and a animation module 1130.

The identification module 1100 includes capability to identify markers having known patterns, such as the markers 160A-160F shown in Figure 1. In one implementation, the identification module 1100 performs pattern matching to locate known and random patterns of markers 160 from frame to frame. In another implementation, the identification module 1100 is configured to identify a single larger marker comprising a group of smaller markers, as discussed in relation to Figures 7A-7C. A marker 160 is designed to be identifiable regardless of its rotational state, and the identification module 1100 is configured accordingly to perform rotationally invariant identification of the markers 160. Once the markers 160 are uniquely identified, they are appropriately associated with the particular part of the actor's body, for example, to which it is coupled. As depicted in Figure 1, a marker 160B is associated with the actor's upper arm 172, markers 160D with the upper and lower thigh 178 (marker strips wrapped around the leg segment), and markers 160C associated with the torso. The identification information is then passed to the orientation module 1110 and the tracking module 1120.

In the example configuration illustrated in Figure 11, the orientation module 1110 receives the identification information and generates orientation information. In one example, the orientation information comprises 6DOF data. The marker 160 is then analyzed in each frame to determine its evolving positional and rotational (i.e., affine) state. In one implementation, a 3-D affine transformation is developed describing the changes in these states from frame to frame for each marker 160. In the case where strip markers 160D are wrapped around each end of a segment of an actor's limb, such as the thigh 178 (see Figure 1), a centroid may be determined for that limb segment approximating the underlying skeletal structure (*i*.*e*., bone). The orientation information (6DOF, affine transformation) is passed to the animation module 1130.

The tracking module 1120 receives identification information and generates marker trajectory information. That is, the markers are tracked through the sequence of image frames, labeled, and a trajectory is determined. In one implementation, labeling and FACS approaches are employed according to U.S. Patent Application 11/467,503, filed August 25, 2006, entitled "Labeling Used in Motion Capture", and U.S. Patent Application 11/829,711, filed July 27, 2007, entitled "FACS Cleaning in Motion Capture." The labeling information (*i*.*e*., trajectory data) is passed to the animation module 1130.

The animation module 1130 receives orientation and labeling information and generates animation data. In one implementation, marker positions and orientations are mapped to positions on a (virtual) digital character model corresponding to the positions on the actor at which the markers were coupled. Similarly, a segment defined by markers on the body of the actor is mapped to a corresponding part on the digital character model. For example, the movement of the centroid approximating the skeletal structure of the actor's limb also models the movement of that part of the actor's body. The transformations describing the movements of the markers 160 and related centroids are then appropriately formatted and generated as animation data for animating a corresponding segment of the digital character.

The animation module 1130 receives the animation information and applies it to the digital character, resulting in its animation. The animation is typically examined for fidelity to the actor's movements, and for purposes of determining whether any, an how much, reprocessing may be required to obtain a desired result.

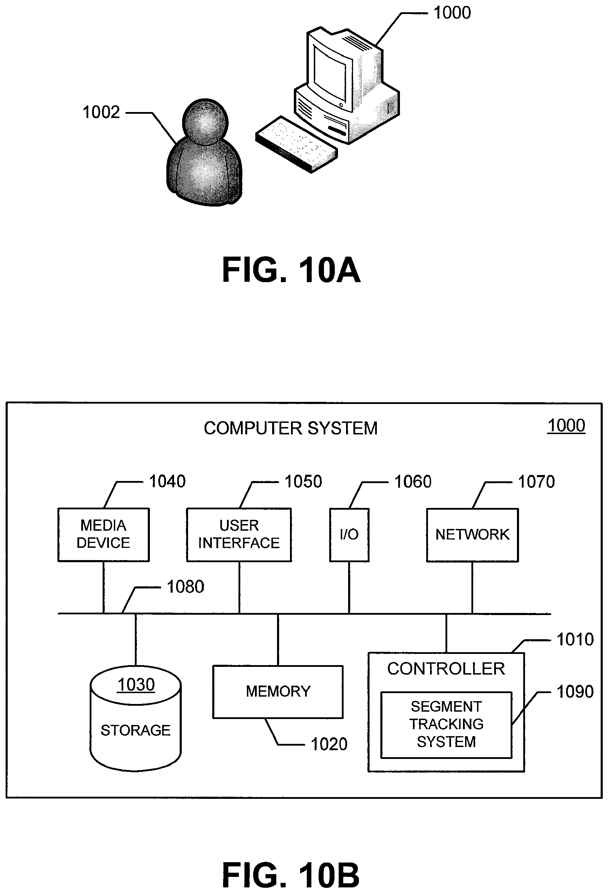

Figure 10A illustrates a representation of a computer system 1000 and a user 1002. The user 1002 uses the computer system 1000 to perform segment tracking. The computer system 1000 stores and executes a segment tracking system 1090, which processes image frame data.

Figure 10B is a functional block diagram illustrating the computer system 1000 hosting the segment tracking system 1090. The controller 1010 is a programmable processor and controls the operation of the computer system 1000 and its components. The controller 1010 loads instructions (e.g., in the form of a computer program) from the memory 1020 or an embedded controller memory (not shown) and executes these instructions to control the system. In its execution, the controller 1010 provides the segment tracking system 1090 as a software system. Alternatively, this service can be implemented as separate components in the controller 1010 or the computer system 1000.

Memory 1020 stores data temporarily for use by the other components of the computer system 1000. In one plementation, memory 1020 is implemented as RAM. In one implementation, memory 1020 also includes long-term or permanent memory, such as flash memory and/or ROM.

Storage 1030 stores data temporarily or long term for use by other components of the computer system 1000, such as for storing data used by the segment tracking system 1090. In one implementation, storage 1030 is a hard disk drive.

The media device 1040 receives removable media and reads and/or writes data to the inserted media. In one implementation, for example, the media device 1040 is an optical disc drive.

The user interface 1050 includes components for accepting user input from the user of the computer system 1000 and presenting information to the user. In one implementation, the user interface 1050 includes a keyboard, a mouse, audio speakers, and a display. The controller 1010 uses input from the user to adjust the operation of the computer system 1000.

The I/O interface 1060 includes one or more I/O ports to connect to corresponding I/O devices, such as external storage or supplemental devices (e.g., a printer or a PDA). In one implementation, the ports of the I/O interface 660 include ports such as: USB ports, PCMCIA ports, serial ports, and/or parallel ports. In another implementation, the I/O interface 1060 includes a wireless interface for communication with external devices wirelessly.

The network interface 1070 includes a wired and/or wireless network connection, such as an RJ-45 or "Wi-Fi" interface (including, but not limited to 802.11) supporting an Ethernet connection.

The computer system 1000 includes additional hardware and software typical of computer systems (e.g., power, cooling, operating system), though these components are not specifically shown in Figure 10B for simplicity. In other implementations, different configurations of the computer system can be used (*e*.*g*., different bus or storage configurations or a multi-processor configuration).

Various illustrative implementations of the present invention have been described. However, one of ordinary skill in the art will recognize that additional implementations are also possible and within the scope of the present invention. For example, known and identifiable random patterns may be printed, painted, and inked onto a surface of an actor or object. Further, any combination of printing, painting, inking, and tattoos, quantum nanodots, and inherent body features may be used to obtain a desired pattern.

It will be further appreciated that grouping functionalities within a module or block is for ease of description. Specific functionalities can be moved from one module or block to another without departing from the invention.

Accordingly, the present invention is not limited to only those embodiments described above.

## Claims

1. A method, comprising:
applying markers to a surface, each marker having a known pattern that provides identification information for the marker and has an identifiable orientation such that rotating the marker causes no ambiguity in determining the identity and orientation of the marker;
acquiring a sequence of image frames, each image frame of the sequence including a plurality of images of the one or more markers covering the surface;
deriving position and orientation information regarding the markers for each image frame of the sequence; and
generating animation data incorporating the position and orientation information; **characterized in that**
said applying markers to a surface includes wrapping at least one strip onto which a known pattern is printed around an appendage of an actor; and
said deriving position and orientation information includes determining a centroid of the strip.

2. The method of claim 1, wherein the markers conform to the surface.

3. The method of claim 1, wherein each known pattern is disposed on the marker with quantum nano dots.

4. The method of claim 3, wherein the quantum nanodots are supported in a medium including an ink, a paint, and a plastic.

5. The method of claim 1, wherein the markers include a temporary tattoo.

6. The method of claim 5, wherein the temporary tattoo includes a face tattoo.

7. The method of claim 6, wherein the face tattoo includes a plurality of separate tattoos.

8. The method of claim 1, wherein the markers include a reflective material.

9. The method of claim 1, wherein the markers include a fluorescent material.

10. The method of claim 1, wherein the surface includes a surface of a person.

11. The method of claim 10, wherein the surface of the person includes at least one of face, body, hand, foot, arm, and leg.

12. The method of claim 1, wherein the surface includes a surface of an object.

13. The method of claim 12, wherein the object includes
at least one of a stage set and a stage prop.

14. The method of claim 1, wherein said applying markers to a surface includes wrapping at least two strips onto which known patterns are printed around an appendage of an actor.

15. The method of claim 14, wherein said deriving position and orientation information includes
determining a centroid of the appendage of the actor using a centroid of the at least two strips.

16. A system, comprising:
an image acquisition module configured to generate a sequence of image frames, each image frame including a plurality of synchronized images of markers disposed on a surface, each marker having a known pattern that provides identification information for the marker and has an identifiable orientation such that rotating the marker causes no ambiguity in determining the identity and orientation of the marker; and
a segment tracking module configured to receive the sequence of image frames and generate animation data based on the markers disposed on the surface;
**characterized in that**
said applying markers to a surface includes wrapping at least one strip onto which a known pattern is printed around an appendage of an actor; and
said deriving position and orientation information includes determining a centroid of the strip.

17. The system of claim 16, wherein said segment tracking module includes:
an identification module configured to receive the sequence of image frames and generate identification information regarding the markers in each image frame of the sequence;
an orientation module configured to receive the sequence of image frames and the identification information and generate orientation information;
a tracking module configured to receive the identification information and generate marker trajectory information; and
an animation module configured to receive the orientation information and the marker trajectory information and generate animation data.

18. A computer program, stored in a computer-readable storage medium, the program comprising executable instructions that cause a computer to:
acquire a sequence of image frames, each image frame of the sequence including a plurality of images of markers covering a surface, each marker having a known pattern that provides identification information for the marker and has an identifiable orientation such that rotating the marker causes no ambiguity in determining the identity and orientation of the marker;
derive position and orientation information regarding the markers; and
generate animation data incorporating the position and orientation information;
**characterized in that**
the markers include at least one strip onto which a known pattern is printed, the at least one strip being wrapped around an appendage of an actor; and said deriving position and orientation information includes determining a centroid of the strip.

## Patentansprüche

1. Verfahren, das Folgendes umfasst:
Anbringen von Markierungen an einer Oberfläche, wobei jede Markierung ein bekanntes Muster aufweist, das Identifikationsinformationen für die Markierung bereitstellt und eine identifizierbare Orientierung hat, so dass Drehen der Markierung keine Unklarheit beim Bestimmen der Identität und Orientierung der Markierung verursacht;
Erfassen einer Sequenz von Bildfeldern, wobei jedes Bildfeld der Sequenz eine Vielzahl von Bildern der die Oberfläche bedeckenden ein oder mehreren Markierungen aufweist;
Ableiten von Positions- und Orientierungsinformationen bezüglich der Markierungen für jedes Bildfeld der Sequenz; und
Erzeugen von Animationsdaten, welche die Positions- und Orientierungsinformationen beinhalten;
**dadurch gekennzeichnet, dass**
das Anbringen von Markierungen an einer Oberfläche das Wickeln von mindestens einem Streifen, auf den ein bekanntes Muster aufgedruckt ist, um einen Ansatz eines Schauspielers einschließt; und
das Ableiten von Positions- und Orientierungsinformationen das Bestimmen eines Schwerpunkts des Streifens einschließt.

2. Verfahren nach Anspruch 1, wobei die Markierungen der Oberfläche entsprechen.

3. Verfahren nach Anspruch 1, wobei jedes bekannte Muster mit Quanten-Nanopunkten auf der Markierung angeordnet ist.

4. Verfahren nach Anspruch 3, wobei die Quanten-Nanopunkte in einem Medium, das eine Tinte, einen Lack und einen Kunststoff einschließt, gelagert sind.

5. Verfahren nach Anspruch 1, wobei die Markierungen eine temporäre Tätowierung einschließen.

6. Verfahren nach Anspruch 5, wobei die temporäre Tätowierung eine Gesichtstätowierung einschließt.

7. Verfahren nach Anspruch 6, wobei die Gesichtstätowierung eine Vielzahl von getrennten Tätowierungen einschließt.

8. Verfahren nach Anspruch 1, wobei die Markierungen ein reflektierendes Material einschließen.

9. Verfahren nach Anspruch 1, wobei die Markierungen ein fluoreszierendes Material einschließen.

10. Verfahren nach Anspruch 1, wobei die Oberfläche eine Oberfläche einer Person einschließt.

11. Verfahren nach Anspruch 10, wobei die Oberfläche der Person mindestens ein Element von Gesicht, Körper, Hand, Fuß, Arm und Bein einschließt.

12. Verfahren nach Anspruch 1, wobei die Oberfläche eine Oberfläche eines Objekts einschließt.

13. Verfahren nach Anspruch 12, wobei das Objekt mindestens ein Element eines Bühnenbilds und einer Bühnenrequisite einschließt.

14. Verfahren nach Anspruch 1, wobei das Anbringen von Markierungen an einer Oberfläche das Wickeln von mindestens zwei Streifen, auf denen bekannte Muster aufgedruckt sind, um einen Ansatz eines Schauspielers beinhaltet.

15. Verfahren nach Anspruch 14, wobei das Ableiten von Positions- und Orientierungsinformationen das Bestimmen eines Schwerpunkts des Ansatzes des Schauspielers unter Verwendung eines Schwerpunkts der mindestens zwei Streifen beinhaltet.

16. System, das Folgendes umfasst:
ein Bilderfassungsmodul, das dazu ausgelegt ist, eine Sequenz von Bildfeldern zu erzeugen, wobei jedes Bildfeld eine Vielzahl von synchronisierten Bildern von auf einer Oberfläche angeordneten Markierungen aufweist, wobei jede Markierung ein bekanntes Muster aufweist, das Identifikationsinformationen für die Markierung bereitstellt und eine identifizierbare Orientierung hat, so dass Drehen der Markierung keine Unklarheit beim Bestimmen der Identität und Orientierung der Markierung verursacht; und
ein Segmentverfolgungsmodul, das dazu ausgelegt ist, die Sequenz von Bildfeldern zu empfangen und Animationsdaten auf der Basis der auf der Oberfläche angeordneten Markierungen zu erzeugen;
**dadurch gekennzeichnet, dass**
das Anbringen von Markierungen an einer Oberfläche das Wickeln von mindestens einem Streifen, auf den ein bekanntes Muster aufgedruckt ist, um einen Ansatz eines Schauspielers einschließt; und
das Ableiten von Positions- und Orientierungsinformationen das Bestimmen eines Schwerpunkts des Streifens einschließt.

17. System nach Anspruch 16, wobei das Segmentverfolgungsmodul Folgendes umfasst:
ein Identifikationsmodul, das dazu ausgelegt ist, die Sequenz von Bildfeldern zu empfangen und Identifikationsinformationen bezüglich der Markierungen in jedem Bildfeld der Sequenz zu erzeugen;
ein Orientierungsmodul, das dazu ausgelegt ist, die Sequenz von Bildfeldern und die Identifikationsinformationen zu empfangen und Orientierungsinformationen zu erzeugen;
ein Verfolgungsmodul, das dazu ausgelegt ist, die Identifikationsinformationen zu empfangen und Markierungsbahninformationen zu erzeugen; und
ein Animationsmodul, das dazu ausgelegt ist, die Orientierungsinformationen und die Markierungsbahninformationen zu empfangen und Animationsdaten zu erzeugen.

18. Computerprogramm, das in einem computerlesbaren Speichermedium gespeichert ist, wobei das Programm ausführbare Anweisungen enthält, die einen Computer zu Folgendem veranlassen:
Erfassen einer Sequenz von Bildfeldern, wobei jedes Bildfeld der Sequenz eine Vielzahl von Bildern von eine Oberfläche bedeckenden Markierungen aufweist, wobei jede Markierung ein bekanntes Muster aufweist, das Identifikationsinformationen für die Markierung bereitstellt und eine identifizierbare Orientierung hat, so dass Drehen der Markierung keine Unklarheit beim Bestimmen der Identität und Orientierung der Markierung verursacht;
Ableiten von Positions- und Orientierungsinformationen bezüglich der Markierungen; und
Erzeugen von Animationsdaten, welche die Positions- und Orientierungsinformationen beinhalten;
**dadurch gekennzeichnet, dass**
die Markierungen mindestens einen Streifen aufweisen, auf den ein bekanntes Muster aufgedruckt ist, wobei der mindestens eine Streifen um einen Ansatz eines Schauspielers gewickelt ist; und
das Ableiten von Positions- und Orientierungsinformationen das Bestimmen eines Schwerpunkts des Streifens einschließt.

## Revendications

1. Procédé, comprenant :
l'application de repères à une surface, chaque repère ayant un motif connu qui fournit des informations d'identification pour le repère et a une orientation identifiable de telle sorte qu'une rotation du repère n'induit aucune ambiguïté dans la détermination de l'identité et de l'orientation du repère ;
l'acquisition d'une séquence de trames d'images, chaque trame d'images de la séquence comportant une pluralité d'images du ou des repères couvrant la surface ;
la déduction d'informations de position et d'orientation concernant les repères pour chaque trame d'images de la séquence ; et
la génération de données d'animation intégrant les informations de position et d'orientation ;
**caractérisé en ce que**
ladite application de repères à une surface comporte l'enroulement d'au moins une bande sur laquelle est imprimé un motif connu autour d'un appendice d'un acteur ; et
ladite déduction d'informations de position et d'orientation comporte la détermination d'un centroïde de la bande.

2. Procédé de la revendication 1, dans lequel les repères épousent la surface.

3. Procédé de la revendication 1, dans lequel chaque motif connu est disposé sur le repère avec des nanopoints quantiques.

4. Procédé de la revendication 3, dans lequel les nanopoints quantiques sont supportés dans un milieu comportant une encre, une peinture, et un plastique.

5. Procédé de la revendication 1, dans lequel les repères comportent un tatouage temporaire.

6. Procédé de la revendication 5, dans lequel le tatouage temporaire comporte un tatouage du visage.

7. Procédé de la revendication 6, dans lequel le tatouage du visage comporte une pluralité de tatouages séparés.

8. Procédé de la revendication 1, dans lequel les repères comportent un matériau réfléchissant

9. Procédé de la revendication 1, dans lequel les repères comportent un matériau fluorescent.

10. Procédé de la revendication 1, dans lequel la surface comporte une surface d'une personne.

11. Procédé de la revendication 10, dans lequel la surface de la personne comporte au moins un élément parmi un visage, un corps, une main, un pied, un bras, et une jambe.

12. Procédé de la revendication 1, dans lequel la surface comporte une surface d'un objet.

13. Procédé de la revendication 12, dans lequel l'objet comporte un décor de théâtre et/ou un accessoire de théâtre.

14. Procédé de la revendication 1, dans lequel ladite application de repères à une surface comporte l'enroulement d'au moins deux bandes sur lesquelles sont imprimés des motifs connus autour d'un appendice d'un acteur.

15. Procédé de la revendication 14, dans lequel ladite déduction d'informations de position et d'orientation comporte
la détermination d'un centroïde de l'appendice de l'acteur au moyen d'un centroïde des au moins deux bandes.

16. Système, comprenant :
un module d'acquisition d'images configuré pour générer une séquence de trames d'images, chaque trame d'images comportant une pluralité d'images synchronisées de repères disposés sur une surface, chaque repère ayant un motif connu qui fournit des informations d'identification pour le repère et a une orientation identifiable de telle sorte qu'une rotation du repère n'induit aucune ambiguïté dans la détermination de l'identité et de l'orientation du repère ; et
un module de suivi de segments configuré pour recevoir la séquence de trames d'images et générer des données d'animation en se basant sur les repères disposés sur la surface ;
**caractérisé en ce que**
ladite application de repères à une surface comporte l'enroulement d'au moins une bande sur laquelle est imprimé un motif connu autour d'un appendice d'un acteur ; et
ladite déduction d'informations de position et d'orientation comporte la détermination d'un centroïde de la bande.

17. Système de la revendication 16, dans lequel ledit module de suivi de segments comporte :
un module d'identification configuré pour recevoir la séquence de trames d'images et générer des informations d'identification concernant les repères dans chaque trame d'images de la séquence ;
un module d'orientation configuré pour recevoir la séquence de trames d'images et les informations d'identification et générer des informations d'orientation ;
un module de suivi configuré pour recevoir les informations d'identification et générer des informations de trajectoires de repères ; et
un module d'animation configuré pour recevoir les informations d'orientation et les informations de trajectoires de repères et générer des données d'animation.

18. Programme informatique, stocké dans un support de stockage lisible par ordinateur, le programme comprenant des instructions exécutables qui conduisent l'ordinateur à :
acquérir une séquence de trames d'images, chaque trame d'images de la séquence comportant une pluralité d'images de repères couvrant une surface, chaque repère ayant un motif connu qui fournit des informations d'identification pour le repère et a une orientation identifiable de telle sorte qu'une rotation du repère n'induit aucune ambiguïté dans la détermination de l'identité et de l'orientation du repère ;
déduire des informations de position et d'orientation concernant les repères ; et
générer des données d'animation intégrant les informations de position et d'orientation ;
**caractérisé en ce que**
les repères comportent au moins une bande sur laquelle est imprimé un motif connu, l'au moins une bande étant enroulée autour d'un appendice d'un acteur ; et
ladite déduction d'informations de position et d'orientation comporte la détermination d'un centroïde de la bande.
